# EUROPÄISCHE PATENTSCHRIFT

(11) **EP 1 910 707 B1**
(45) Veröffentlichungstag und Bekanntmachung des Hinweises auf die Patenterteilung: **30.12.2009**
(21) Anmeldenummer: 06776301.1
(22) Anmeldetag: 20.07.2006
(51) Int. Cl.: F16H 1/28

(54) **STELLANTRIEB FÜR ARMATUREN MIT EINEM PLANETENGETRIEBE**
ACTUATOR FOR UNITS COMPRISING A PLANETARY GEAR
MECANISME DE COMMANDE POUR DES INSTRUMENTS, POURVU D'UN ENGRENAGE PLANETAIRE

(30) Priorität: 22.07.2005 DE 102005034340
(43) Veröffentlichungstag der Anmeldung: 16.04.2008
(73) Patentinhaber: PS Automation GmbH, 67090 Bad Dürkheim (DE)
(72) Erfinder: SCHMIDHUBER, Max, 67251 Freinsheim (DE); HÖDL, Wolfgang, 2491 Steinbrunn (AT)
(74) Vertreter: Wagner, Jutta
(86) Internationale Anmeldenummer: PCT/EP2006/007134
(87) Internationale Veröffentlichungsnummer: WO 2007/009787

(56) Entgegenhaltungen:
- EP-A- 1 693 600
- GB-A- 1 206 932
- US-A- 3 391 583
- US-A- 3 788 165
- US-A- 6 129 337

## Beschreibung

Die Erfindung betrifft einen Stellantrieb für Armaturen mit einem Planetengetriebe.

Es ist allgemein bekannt, dass unter anderem Planetengetriebe für Stellantriebe eingesetzt werden, so dass die Drehzahl eines Antriebes mit Hilfe dieses Planetengetriebes auf eine gewünschte langsamere Drehzahl eines Stellantriebes reduziert wird.

Bei einem allgemein bekannten Stellantrieb treibt ein Motor über ein Vorgelege ein exzentrisch angeordnetes Zahnrad an. Mit dem exzentrisch angeordneten Zahnrad ist ein drehbar gelagertes Planetenrad verbunden, welches sich in einer Innenverzahnung eines Sonnenrades abwälzt. Aufgrund der unterschiedlichen Zähnezahl der beiden Räder entsteht eine Relativdrehzahl, die über am Planetenrad angebaute Mitnehmerstifte auf eine Mitnehmerscheibe übertragen wird. Die Mitnehmerscheibe ist durch eine Kerbverzahnung mit einer Welle formflüssig verbunden. Auf diese Weise entsteht ein vergleichsweise kompaktes Getriebe, das jedoch aufgrund der Anordnung des Motors und weiterer Komponenten einen vergleichsweise großen Raumbedarf radial zur Drehachse des Planetengetriebes gesehen benötigt. Zudem wird aufgrund der gewählten Bauweise eines solchen Stellantriebes die Art der Verbindung mit der anzutreibenden Armatur stark eingeschränkt.

Aus der gattungsbildenden GB 1 206 932 A ist ein Stellantrieb für Armaturen mit einem Planetengetriebe in der Form eines Exzentergetriebes mit einem elektrischen Antrieb mit einer als erste Hohlwelle ausgebildeten Antriebswelle sowie einem Abtriebselement mit einer aus Vollmaterial gebildeten Abtriebswelle bekannt, wobei das Abtriebselement ein Lagerelement zur Halterung und Aufnahme einer in der ersten Hohlwelle geführten Spindel aufweist, welche eine Anzeigevorrichtung antreibt, um die Lage/Position des Stellantriebs anzuzeigen oder anzugeben.

Weiterhin ist aus EP 1 693 600 A1 ein Stellantrieb für ein Ventil mit Reduktionsgetriebe und einem elektromagnetischen Antrieb bekannt, wobei das Reduktionsgetriebe als Planetengetriebe ausgebildet ist und ein Sonnenrad, welches als integraler Bestandteil des Rotors des Antriebs ausgebildet ist, vorgesehen ist. Das Sonnenrad wirkt mit drei auf einem Planetenträger angeordneten Planetenrädern zusammen und greift in diese ein. Weiterhin wirken die Planetenräder mit einem nahezu starren Zahnkranz sowie einem Zahnkranz der Abtriebswelle zusammen.

Darüber hinaus ist aus der US 3391583 auch ein Stellantrieb mit Planetengetriebe zur Ventilsteuerung bekannt, wobei ein Antrieb vorgesehen ist, der über ein entsprechendes Vorgelege eine Antriebswelle des Planetengetriebes mit Planetenträger und Planetenrädern antreibt. Die Antriebswelle ist dabei, bis auf den Bereich einer Außenverzahnung, die einen Teil des Vorgeleges bildet, von einem Gehäuseelement und einer Abtriebswelle mit Anformung nahezu vollständig eingeschlossen und umkapselt. Die Drehbewegung des Antriebs wird über das Vorgelege mit entsprechender Übersetzung auf die Antriebswelle und die Planetenräder übertragen, welche wiederum die Abtriebswelle antreiben. Antrieb, Antriebswelle und Abtriebswelle besitzen keine gemeinsame Drehachse. Der vorgenannte Stellantrieb bedingt nachteilig eine räumlich ausgedehnte, flächige Anordnung von Antrieb und Planetengetriebe. Eine kompakte Bauweise des Stellantriebes ist dadurch nicht ermöglicht.

Ausgehend von diesem Stand der Technik ist es Aufgabe der Erfindung, einen Stellantrieb mit einem Planetengetriebe anzugeben, der möglichst kompakt gebaut ist, einen möglichst robusten Aufbau aufweist und eine zudem möglichst große Vielfalt bei der Anordnung der einzelnen Elemente des Stellantriebes ermöglicht.

Diese Aufgabe wird erfindungsgemäß durch den Stellantrieb für Armaturen mit den in Anspruch 1 genannten Merkmalen gelöst.

Der erfindungsgemäße Stellantrieb für Armaturen umfasst ein Planetengetriebe, insbesondere ein Planetendifferenzgetriebe, dessen radial innerer Bereich als Hohlwelle ausgebildet ist, und das eine Abtriebswelle aufweist, die mit der zu betreibenden Armatur zusammenwirkt. Der erfindungsgemäße Stellantrieb ist weiterhin mit einem Antrieb versehen. Das Planetengetriebe weist eine Antriebswelle auf, die mit dem Antrieb verbunden und durch diesen antreibbar ist, wobei die Antriebswelle dabei als erste Hohlwelle sowie die Abtriebswelle als zweite Hohlwelle ausgestaltet ist. Der erfindungsgemäße Stellantrieb ist **dadurch gekennzeichnet, dass** ein Planetenträger vorgesehen ist, der mit der ersten Hohlwelle derart verbunden ist oder mit seinem radial inneren Bereich als erste Hohlwelle derart ausgebildet ist, dass bei einer Drehung der ersten Hohlwelle die Drehbewegung auch vom Planetenträger ausgeführt wird und der Antrieb sowie die erste und zweite Hohlwelle derart angeordnet sind, dass sie eine gemeinsame Drehachse besitzen und wenigstens der kleinere der beiden lichten Durchmesser der Hohlwellen auf die Abmessungen in Querrichtung eines im wesentlichen in Längsrichtung erstreckten Antriebsstabes einer mit der Abtriebswelle verbindbaren Armatur angepasst ist.

Auf diese Weise ist beim erfindungsgemäßen Stellantrieb vermieden, dass ein Antriebsstab, häufig eine Antriebsspindel einer Armatur, denselben räumlichen Nahbereich der gemeinsamen Drehachse beansprucht wie das Planetengetriebe selbst. Insbesondere ergibt sich hierdurch die Möglichkeit, dass der Stellantrieb insgesamt im Nahbereich der anzutreibenden Armatur angeordnet werden kann, ohne dass dabei der Hub eines Stellkörpers der Armatur und damit der Hub des entsprechenden Antriebsstabes ein anordnungshindemdes Merkmal wäre. Derart wird zum einen der Stellantrieb selbst kompakter, zum anderen werden die konstruktiven Ausgestaltungsmöglichkeiten für die Anordnung von Stellantrieb mit einer Armatur erhöht.

Ein Vorteil des erfindungsgemäßen Stellantriebes ist auch darin zu sehen, dass eine Durchdringung eines Bauteils der Armatur durch den räumlichen Bereich des Stellantriebes, nämlich durch die erste und zweite Hohlwelle, ermöglicht ist.

Auf diese Weise fallen die Drehachsen der ersten und der zweiten Hohlwelle sowie des Antriebs in einer gemeinsamen Drehachse zusammen, wobei weiterhin der Vorteil bestehen bleibt, dass durch den lichten Bereich der Hohlwellen wiederum ein Antriebskörper für eine Armatur durchführbar ist. Zudem ist hierdurch die Bauart des Stellantriebes noch kompakter geworden. Der notwendige radiale Raumbedarf um die gemeinsame Drehachse ist entsprechend klein.

Zudem ist es nunmehr möglich, dass die erste Hohlwelle unmittelbar durch einen Antrieb angetrieben wird oder in einer konstruktiven Variante des erfindungsgemäßen Stellantriebes einen Teil des Antriebs, insbesondere den Anker eines Elektromotors oder die Turbine oder das Flügelrad eines Hydraulik- oder Pneumatikantriebs beziehungsweise -motors, bildet oder die erste und zweite Hohlwelle als gemeinsame Hohlwelle ausgestaltet sind, wobei auch die gemeinsame Hohlwelle in konstruktiver Abwandlung als Teil des Antriebs, insbesondere als Anker oder Läufer eines Elektromotors oder als Turbine, Rotor oder Flügelrad eines Hydraulik- oder Pneumatikantriebs, ausbildbar ist.

In alternativer Ausgestaltung des erfindungsgemäßen Stellantriebes ist als Antrieb ein Elektromotor, Hydraulik- oder Pneumatikantrieb eingesetzt, welcher als Antriebswelle eine weitere Hohlwelle aufweist, die mit der ersten Hohlwelle verbunden oder als erste Hohlwelle ausgebildet ist und welche weitere Hohlwelle als Anker oder Läufer des Elektromotors oder als Turbine, Rotor oder Flügelrad eines Hydraulik- oder Pneumatikantriebs ausgestaltet ist.

Die als erste Hohlwelle ausgestaltete Antriebswelle und der Anker, Läufer oder Rotor des als Antrieb eingesetzten Elektromotors beziehungsweise des als Turbine, Rotor oder Flügelrad des als Antrieb eingesetzten Hydraulik- oder Pneumatikmotors, sind dabei in vorteilhafter Ausgestaltung einstückig ausgebildet..

Auch bei dieser Anordnung fallen die Drehachsen der ersten Hohlwelle, der zweiten Hohlwelle sowie der weiteren Hohlwelle des Antriebs in einer gemeinsamen Drehachse zusammen, wobei weiterhin der Vorteil bestehen bleibt, dass durch den lichten Bereich der Hohlwellen wiederum ein Antriebskörper für eine Armatur durchführbar ist.

Hierdurch wird die Anzahl der Bauteile weiter reduziert und der Stellantrieb kompaktiert.

In vorteilhafter Ausgestaltung umfasst der Stellantrieb ein Planetengetriebe, insbesondere ein Planetendifferenzgetriebe, mit einem Planetenträger, der wenigstens ein Planetenrad aufweist, einer Antriebswelle, die als erste Hohlwelle ausgestaltet ist, einer Abtriebswelle, die als zweite Hohlwelle ausgestaltet ist und eine erste Innenverzahnung aufweist, die mit einer Verzahnung des wenigstens einen Planetenrades im Eingriff steht, und ein Stützrad, das eine zweite Innenverzahnung aufweist, die ebenfalls mit der Verzahnung des wenigstens einen Planetenrades im Eingriff steht, und mit welchem Stützrad die auftretenden Kräfte oder Drehmomente an ein mit diesem in Wirkverbindung stehenden Gehäuse übertragbar sind, wobei mit der ersten Hohlwelle die Antriebskräfte auf das wenigstens eine Planetenrad oder den Planetenträger übertragbar sind, und wobei eine gedachte Drehachse des wenigstens einen Planetenrades immer außerhalb des lichten Durchmessers der ersten Hohlwelle liegt.

Indem sowohl die Antriebswelle als auch die Abtriebswelle als Hohlwelle ausgebildet sind entsteht im Bereich der Drehachse der Hohlwellen ein Freiraum, der durch den lichten Durchmesser der Hohlwellen gebildet ist. Dieser Freiraum ist für den Stellantrieb in vorteilhafter Weise nutzbar, da üblicherweise angetriebene Armaturen in der Regel einen bestimmten Stellhub benötigen, der üblicherweise mittels einer Spindel mit einer Antriebsmutter, welche vom Stellantrieb angetrieben wird, bereitgestellt wird. Der Stellhub kann vergleichsweise groß zu den Dimensionen des Stellantriebs selbst sein.

Ein wesentlicher Vorteil des demgemäßen Planetengetriebes sowie des entsprechenden Stellantriebes ist es, dass der minimale lichte Durchmesser der ersten und zweiten Hohlwelle vorgebbar sind, nämlich insbesondere auf den Durchmesser einer vorbeschriebenen Antriebsspindel einer Armatur. Auf diese Weise lässt sich besonders einfach eine solche Antriebsspindel durch die Hohlwelle beziehungsweise die Hohlwellen des Planetengetriebes und/oder des Stellantriebes hindurchführen. Die Bauart ist entsprechend kompakt, und es ergeben sich völlig neue Möglichkeiten für die Anordnung des Planetengetriebes und/oder des Stellantriebes im Verhältnis zu der anzutreibenden Armatur.

Zudem sind mit um die erste Hohlwelle umlaufenden Planetenrädern besonders schwingungsgünstige Ausgestaltungen eines Planetengetriebes und damit auch eines Stellantriebes möglich. Die umlaufenden Massen sind vergleichsweise klein. Ein Optimum an umlaufenden Planetenrädern ist mit dreien dieser Räder erreicht.

Auch kann das freie, nämlich das der zweiten Hohlwelle abgewandte Ende der ersten Hohlwelle, in vorteilhafter Weiterbildung des erfindungsgemäßen Planetengetriebes, mit einem Verbindungselement, insbesondere einer Kupplung, zur Anbildung an einen Antrieb versehen sein.

Ein zusätzlicher Vorteil ergibt sich, wenn die lichten Durchmesser der ersten und zweiten Hohlwelle und/oder der weiteren Hohlwelle des Antriebes aufeinander angepasst sind.

Auf diese Weise ist erreicht, dass der lichte Bereich der Hohlwelle im wesentlichen ohne Stufen oder Absätze mit Kanten ist und auf diese Weise mögliche mechanische Hindernisse für eine durch den lichten Bereiche laufende Antriebsspindel konstruktiv vermieden sind.

Eine weitere vorteilhafte Ausgestaltung des Stellantriebes wird dadurch erreicht, dass das Stützrad des Planetengetriebes eine Außenverzahnung aufweist, die mit einer Verzahnung mit einer Messwelle im Eingriff steht, dass die auf die Messwelle übertragenen Kräfte und Momente durch eine mit der Messwelle verbundene Federanordnung aufgenommen werden, und dass die Auslenkung der Federanordnung ein Maß für die Größe der übertragenen Kraft oder des übertragenen Momentes ist.

Auf diese Weise werden die Kräfte und Momente nicht einfach in das Gehäuse eingeleitet und dort abgestürzt, sondern es besteht die Möglichkeit, beispielsweise über eine entsprechende Anzeigevorrichtung, die Größe der zu übertragenden Kraft oder des zu übertragenden Momentes unmittelbar zu erfassen oder anzuzeigen. Darüber hinaus ist so eine elegante Möglichkeit geschaffen, beispielsweise über ein entsprechendes Handrad, das an dieser Messwelle angebracht ist, das Stützrad händisch zu drehen. Dann erfolgt die Drehung der zweiten Hohlwelle unmittelbar, ohne dass dabei die vollständige Untersetzung des Planetengetriebes wirksam wäre.

Weitere vorteilhafte Ausgestaltungen des Erfindungsgegenstandes sind den abhängigen Ansprüchen zum erfindungsgemäßen Stellantrieb zu entnehmen.

Anhand eines in der Zeichnung dargestellten Ausführungsbeispiels sollen die Erfindung, vorteilhaft ausgestaltete Verbesserungen der Erfindung, sowie besondere Vorteile der Erfindung näher erläutert und beschrieben werden.

### Es zeigt:

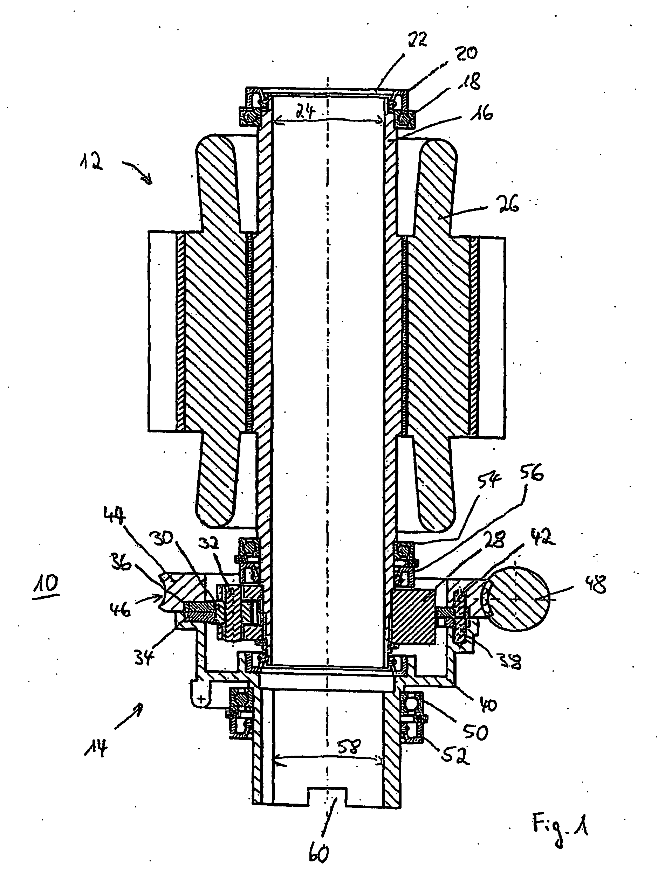

- Fig. 1: einen ersten Stellantrieb

Fig. 1 zeigt einen ersten Stellantrieb 10, der einen ersten Servomotor 12 sowie ein erstes, als Planetendifferenzgetriebe ausgebildetes Planetengetriebe 14 aufweist. Dabei zeigt diese Figur lediglich die wesentlichen mechanischen Teile, die zur Erklärung des erfindungsgemäßen Planetengetriebes beziehungsweise des erfindungsgemäßen Stellantrieb notwendig sind. So ist zum Beispiel kein Gehäuse dargestellt. Dies bei Bedarf zu ergänzen, liegt jedoch im Bereich des Könnens eines Fachmanns, so dass die üblichen, jedoch nicht dargestellten Bauteile zur Komplettierung eines Stellantriebes vom Fachmann ohne weiteres komplettiert werden können.

Der erste Servomotor 12 weist als Antriebswelle eine erste Hohlwelle 16 auf, an deren einem Ende ein erstes Wellenlager 18 mit einer ersten Wellendichtung 20 angeordnet ist, wobei die Anordnung im Bereich der ersten Hohlwelle 16 eine Ausnehmung 22 aufweist, die den lichten Bereich 24 der ersten Hohlwelle 16 an keiner Stelle überdeckt. Dabei weist der lichte Bereich 24 in seiner kompletten Längserstreckung einen einheitlichen Durchmesser auf.

Die erste Hohlwelle 16 erstreckt sich an ihrem anderen, freien Ende noch um eine bestimmte Länge über das räumliche Ende der Längserstreckung eines Stators 26 des ersten Servomotors 12 hinaus, und zwar um eine Länge, die gewährleistet, dass die wesentlichen mechanischen Elemente des ersten Planetengetriebes 14 auf diesem Wellenende anordbar sind. In dieser Anordnung ist also die erste Hohlwelle 16 sowohl als Rotor- oder Ankerwelle des ersten Servomotors 12 ausgestaltet, als auch als Antriebswelle für das erste Planetengetriebe 14.

Das freie Ende der ersten Hohlwelle umfasst dabei den dem Planetenträger sowie der zweiten Hohlwelle abgewandten endseitigen Bereich der ersten Hohlwelle.

Auf der äußeren Mantelfläche des soeben beschriebenen anderen Wellenendes der ersten Hohlwelle 16 ist ein Absatz eingeformt, auf dem ein Planetenträger 28 angeordnet ist. Die Verbindung zwischen dem Planetenträger 28 und der ersten Hohlwelle 16 kann in besonders einfacher Weise formschlüssig, beispielsweise durch eine Federverbindung oder kraftschlüssig, beispielsweise durch eine Schrumpfverbindung oder auch durch andere dem Fachmann geläufige Verbindungstechniken hergestellt werden. Zudem ist sichergestellt, dass die Antriebskräfte durch die erste Hohlwelle 16 in den Planententräger 28 gelangen, so dass bei einer Drehung der ersten Hohlwelle 16 die Drehbewegung auch vom Planetenträger 28 durchgeführt wird.

Im gewählten Beispiel trägt der Planetenträger 28 drei Planetenräder, wobei in dieser Schnittdarstellung des Stellantriebes 10 lediglich ein erstes Planetenrad 30 dargestellt ist. Dieses ist um einen Lagerbolzen 32, der in entsprechenden Ausnehmungen des Planetenträgers 28 gehalten wird, drehbar gelagert. Dabei reicht erfindungsgemäß bereits ein Planetenrad. Aus schwingungstechnischen Gründen ist eine höhere Anzahl an Planetenrädern von Vorteil. Ein bevorzugte Anzahl ist dabei mit drei Planetenrädern erreicht.
Dabei greifen die Zähne einer Außenverzahnung der Planetenräder, also auch des ersten Planetenrades 30, in die jeweilige Innenverzahnung eines ersten 34 sowie eines zweiten Zahnradringes 36 ein und wälzen entsprechend den Verzahnungsverhältnissen über diese ab. Dabei ist der erste Zahnradring 34 durch einen ersten Verbindungsstift 38 mit einer zweiten Hohlwelle 40 verbunden, während der zweite Zahnradring 36 über einen zweiten Verbindungsstift 42 mit einem Stützrad 44 verbunden ist. Die Verbindungsstifte 38, 42 stellen dabei eine sichere Verbindung zwischen den jeweiligen Zahnradringen 34, 36 und deren Trägern, also der zweiten Hohlwelle 40 sowie dem Stützrad 44 dar.

Das Stützrad 44 weist zudem noch eine Außenverzahnung 46 auf, die mit einer Messwelle 48 im Eingriff steht. Dazu hat die Messwelle 48 eine auf die Außenverzahnung 46 angepasste Wendelung in ihrer äußeren Mantelfläche. Die Messwelle 48 ist dann in einem in dieser Figur nicht dargestellten Gehäuse gelagert, so dass eventuelle auftretende Kräfte und Momente durch die Messwelle sicher in dieses Gehäuse abgeleitet werden.
Solche Kräfte können wie folgt entstehen. Durch den ersten Servomotor 12 wird die erste Hohlwelle 16 gedreht und somit auch der Planetenträger 28. In einer schwingungstechnisch günstigen Ausgestaltung des Planetengetriebes sind, wie hier vorliegend, drei Planetenräder vorgesehen, die durch die Drehung des Planetenträgers 28 zwangsweise bewegt werden. Durch das Abwälzen der Planetenräder in der Innenverzahnung des zweiten Zahnradringes 36 werden Kräfte und Momente auf das Stützrad 44 übertragen, das diese letztlich in die Messwelle 48 überträgt. In der in Figur 1 gewählten Darstellung der Messwelle als Schnitt durch diese, wirken die eben beschriebenen Kräfte in deren Längsrichtung, so dass eine entsprechende Anordnung von Federn in dieser Längsrichtung eine vorteilhafte Möglichkeit wären, die Kräfte aufzunehmen. Vorteilhafterweise ist dann eine Möglichkeit erreicht, die Kräfte durch Messung der Auslenkung der Federn zu messen. Zudem ist durch die Fixierung der Messwelle 48 im Gehäuse erreicht, dass sich das Stützrad 44 unter dem Einfluss der Kräfte und Momente nur in minimalem Umfang aus seiner Winkellage herausbewegt. Die durch die Planetenräder in die Innenverzahnung der Zahnradringe 34, 36 eingeleitete Leistung wird demgemäß nur den ersten Zahnradring 34 in eine Drehbewegung versetzen. Dieser ist nämlich zusammen mit der zweiten Hohlwelle 40 über ein zweites Wellenlager 50 drehbar gelagert. Auf diese Weise ist die Kraft- und Momentenübertragung von der Antriebswelle, nämlich der ersten Hohlwelle 16, auf die Abtriebswelle, nämlich die zweite Hohlwelle 40, sichergestellt.

Der Unterschied in der Anzahl der Zähne der Innenverzahnung zwischen erstem 34 und zweitem Zahnradring 36 darf aus mechanischen Gründen nur ein ganzzahliges Vielfaches der Anzahl der vorhandenen Planetenräder betragen. Auf diese Weise lässt sich über die Anzahl der Planetenräder und die Ausgestaltung der Innenverzahnungen der Zahnradringe 34, 36 das Untersetzungsverhältnis des ersten Planetengetriebes 14 konstruktiv besonders leicht einstellen.

Vergleichbar mit der Situation am ersten Wellenlager 18 ist auch am zweiten Wellenlager 50 eine zweite Wellendichtung 52 angeordnet, die zum einen sicherstellt, dass die in der Umgebung des ersten Stellantriebes 10 eventuell vorhandenen Schmutzpartikel nicht in Richtung Planetengetriebe gelangen können. Auch das zweite Wellenlager 50 ist letztlich in seinem radial äußeren Bereich an einem Gehäuse des Planetengetriebes abgestützt, was jedoch nicht in dieser Figur dargestellt ist. Eine geeignete Lagerung der Wellenanordnung aus erster Hohlwelle 16 sowie zweiter Hohlwelle 40 ist dadurch sichergestellt, dass noch eine dritte Wellenlagerung 54 mit einer dritten Wellendichtung 56 an einer geeigneten Stelle zwischen dem Servomotor 12 und dem ersten Planetengetriebe 14 auf der ersten Hohlwelle 16 angeordnet ist.

Die zweite Hohlwelle 40 weist funktionsentsprechend entlang ihrer Längsachse unterschiedliche lichte Durchmesser auf, von denen jedoch ein kleinster lichter Durchmesser 58 dem Durchmesser des lichten Bereichs 24 entspricht. Diese Durchmesser sind aufeinander angepasst. Auf diese Weise ist sichergestellt, dass beispielsweise eine Hubspindel eines anzutreibenden Spindelantriebs einer Armatur durch die beiden Hohlwellen 16, 40 ohne weiteres durchgeführt werden kann, ohne dass es eine mechanische Störstelle gäbe. Der Anschluss des gezeigten ersten Stellgetriebes an eine anzutreibende Armatur beziehungsweise deren Hubantrieb beziehungsweise Hubgestänge ist hier nur schematisch gezeigt. In dieser Ausgestaltung ist nämlich auf der vom ersten Servomotor 12 abgewandten Seite der zweiten Hohlwelle 40 eine Nutung 60 gezeigt, die eine formschlüssige Kraftübertragung der durch die zweite Hohlwelle 40 geleiteten Kräfte, beispielsweise auf eine Antriebsmutter, die sich in diese Nutung 60 einfügt, dargestellt. Derart wird die Antriebsmutter in eine Drehbewegung versetzt, jedoch an ihrer räumlichen Fortbewegung in Längsrichtung der Drehachse der zweiten Hohlwelle 40 gehindert. So wird eine in der Antriebsmutter geführte Antriebsspindel in eine Bewegung gezwungen, die in Längsrichtung der Drehachse der zweiten Hohlwelle 40 verläuft. Letztlich ist damit die Drehbewegung der zweiten Hohlwelle 40 in eine Längsbewegung einer Hubspindel einer Armatur umgesetzt.

Natürlich ist es auch denkbar, dass ein derartiger Antrieb lediglich eine geringe Drehbewegung ausführen muss, wie es beispielsweise zum Öffnen und Schließen von Kugelhähnen erforderlich ist, nämlich eine Viertelkreisdrehung durchzuführen.

Die Drehbewegung der ersten Hohlwelle 16 wird allein über den ersten Servomotor 12 sichergestellt. So kann beispielsweise eine entsprechende Regelung der Drehzahl des ersten Servomotors 12 dafür genutzt werden, letztlich die Öffnungsbeziehungsweise Schließgeschwindigkeit der betätigten Armatur zu verändern oder zu regeln. Auf diese Weise können auch beliebige Schließ- beziehungsweise Öffnungsprofile mit sich verändernden Geschwindigkeiten gefahren werden. Ein üblicher Fall ist es aber auch, dass der erste Servomotor 12 mit einer konstanten Geschwindigkeit betrieben wird.

Die Übersetzung von der Antriebsleistung der ersten. Hohlwelle 16 in Bezug auf Leistung und Drehmomente wird durch geeignete Wahl der Übersetzungsverhältnisse im Planetengetriebe, nämlich die geeignete Wahl der Zähnezahl der Planetenräder, sowie der Zähnradringe 34, 36 gewährleistet. In einem einfachen Fall kann sich die Zähnezahl der Innenverzahnung des ersten 34 sowie des zweiten Zahnradringes 36 nur um wenige Zähne unterscheiden, beispielsweise bei einem Planetengetriebe mit drei Planetenrädern um drei Zähne, insbesondere mit einer Gesamtzahnzahl der Zahnradringe von 72 und 75 Zähnen. Wobei auch größere Zähnezahldifferenzen möglich sind.

Es sei darauf hingewiesen, dass sich die zweite Hohlwelle 40 nur dann dreht, wenn die Zähnezahl zwischen Zahnradring 34 und 36 unterschiedlich ist...

Das Übersetzungsverhältnis des Getriebes ergibt sich dabei aus dem Verhältnis der Zähnezahl der Planetenräder und des ersten 34 sowie zweiten Zahnradringes 36, wobei der erste 34 und der zweite Zahnradring 36 eine unterschiedliche Anzahl von Zähnen aufweisen müssen, wie vorstehend bereits erläutert wurde.

Die beschriebene Ausführungsform des erfindungsgemäßen Stellantriebes hat den Vorteil, dass ein besonders geringes Bauvolumen erreicht wird, insbesondere in radialer Richtung zur Drehachse der ersten 16 und zweiten Hohlwelle 40 gesehen. Das erfindungsgemäß eingesetzte Planetengetriebe stellt zudem einen besonders hohen Wirkungsgrad sicher und zeichnet sich durch die um die erste Hohlwelle 16 umlaufenden Planetenräder mit einer besonders guten Laufruhe aus. Ein Optimum an Laufruhe wird erzielt, wenn drei Planetenräder eingesetzt werden.

### Bezugszeichenliste

- 10: Erster Stellantrieb
- 12: Erster Servomotor
- 14: Erstes Planetengetriebe
- 16: Erste Hohlwelle
- 18: Erstes Wellenlager
- 20: Erste Wellendichtung
- 22: Ausnehmung
- 24: Lichter Bereich
- 26: Stator
- 28: Planetenträger
- 30: Erstes Planetenrad
- 32: Lagerbolzen
- 34: Erster Zahnradring
- 36: Zweiter Zahnradring
- 38: Erster Verbindungsstift
- 40: Zweite Hohlwelle
- 42: Zweiter Verbindungsstift
- 44: Stützrad
- 46: Außenverzahnung
- 48: Messwelle
- 50: Zweites Wellenlager
- 52: Zweite Wellendichtung
- 54: Drittes Wellenlager
- 56: Dritte Wellendichtung
- 58: Minimaler lichter Durchmesser
- 60: Nutung

## Patentansprüche

1. Stellantrieb (10) für Armaturen mit einem Planetengetriebe (14), insbesondere ein Planetendifferenzgetriebe, dessen radial innerer Bereich als Hohlwelle ausgebildet ist und welches eine Abtriebswelle (40) aufweist, die mit der zu betreibenden Armatur zusammenwirkt, und mit einem Antrieb (12), wobei eine Antriebswelle des Planetengetriebes (14) mit dem Antrieb verbunden und durch diesen antreibbar ist, die Antriebswelle als erste Hohlwelle (16) ausgestaltet ist wobei der Antrieb, die erste Hohlwelle (16) und die Abtriebswelle (40) eine gemeinsame Drehachse haben, und ein Planetenträger (28) mit der ersten Hohlwelle (16) derart verbunden ist oder mit seinem radial inneren Bereich als erste Hohlwelle (16) derart ausgebildet ist, dass bei einer Drehung der ersten Hohlwelle (16) die Drehbewegung auch vom Planetenträger (28) ausgeführt wird, **dadurch gekennzeichnet, dass** die Abtriebswelle als zweite Hohlwelle (40) ausgestaltet ist und dass wenigstens der kleinere der beiden lichten Durchmesser der Hohlwellen auf die Abmessungen in Querrichtung eines im wesentlichen längserstreckten Antriebsstabes einer mit der Abtriebswelle verbindbaren Armatur angepasst ist.

2. Stellantrieb (10) nach Anspruch 1, **dadurch gekennzeichnet, dass** der Antriebsstab in seiner Längsrichtung durch die erste (16) und zweite Hohlwelle (40) hindurchbewegbar ist.

3. Stellantrieb (10) nach einem der Ansprüche 1 oder 2, **dadurch gekennzeichnet, dass** der Antrieb ein Elektromotor, insbesondere ein Servomotor (12), oder ein Pneumatikmotor oder ein Hydraulikmotor ist.

4. Stellantrieb (10) nach einem der Ansprüche 1 bis 3, **dadurch gekennzeichnet, dass** der Antrieb eine weitere Hohlwelle aufweist, die mit der ersten Hohlwelle (16) verbunden oder als erste Hohlwelle (16) ausgestaltet ist.

5. Stellantrieb (10) nach Anspruch 4, **dadurch gekennzeichnet, dass** ein lichter Durchmesser der weiteren Hohlwelle auf die Durchmesser der ersten (16) und zweiten Hohlwelle (40) angepasst ist.

6. Stellantrieb (10) nach Anspruch 4 oder 5, **dadurch gekennzeichnet, dass** der Antriebsstab in seiner Längsrichtung durch die weitere Hohlwelle hindurchbewegbar ist.

7. Stellantrieb (10) nach einem der Ansprüche 4 bis 6, **dadurch gekennzeichnet, dass** der Planetenträger (28) wenigstens ein Planetenrad (30) aufweist und die als zweite Hohlwelle (40) ausgestaltete Abtriebswelle eine erste Innenverzahnung aufweist, die mit einer Verzahnung des wenigstens einen Planetenrades (30) im Eingriff steht, und ein Stützrad (44) vorgesehen ist, das eine zweite Innenverzahnung aufweist, die ebenfalls mit der Verzahnung des wenigstens einen Planetenrades (30) im Eingriff steht, und mit welchem Stützrad (44) die auftretenden Kräfte oder Drehmomente an ein mit diesem in Wirkverbindung stehenden Gehäuse übertragbar sind, wobei mit der ersten Hohlwelle (16) die Antriebskräfte auf das wenigstens eine Planetenrad (30) oder den Planetenträger (28) übertragbar sind, und wobei eine gedachte Drehachse des wenigstens einen Planetenrades (30) immer außerhalb des lichten Durchmessers der ersten Hohlwelle (16) liegt.

8. Stellantrieb (10) nach einem der vorgenannten Ansprüche, **dadurch gekennzeichnet, dass** die erste Hohlwelle (16), insbesondere ein freies Ende der ersten Hohlwelle (16), als Teil des Antriebs ausgebildet ist.

9. Stellantrieb (10) nach einem der vorherigen Ansprüche, **dadurch gekennzeichnet, dass** die erste Hohlwelle (16), insbesondere ein freies Ende der Hohlwelle (16), als Anker oder Läufer oder Rotor eines Elektromotors ausgebildet ist.

10. Stellantrieb (10) nach einem der Ansprüche 1 bis 8, **dadurch gekennzeichnet, dass** die erste Hohlwelle (16), insbesondere ein freies Ende der Hohlwelle (16), als Rotor, Flügelrad oder Turbine eines Pneumatikoder Hydraulikmotors ausgebildet ist.

11. Stellantrieb (10) nach einem der Ansprüche 9 oder 10, **dadurch gekennzeichnet, dass** die erste Hohlwelle (16) und der Anker, der Läufer oder der Rotor des Elektromotors oder der Rotor, das Flügelrad oder die Turbine des Pneumatik- oder Hydraulikmotors einstückig ausgebildet sind.

12. Stellantrieb (10) nach einem der vorgenannten Ansprüche, **dadurch gekennzeichnet, dass** die zweite Hohlwelle (40) an ihrer der ersten Hohlwelle (16) abgewandten Stirnseite als Kupplung, insbesondere als formschlüssige, ausgestaltet ist.

13. Stellantrieb (10) nach einem der vorherigen Ansprüche, **dadurch gekennzeichnet, dass** die erste (16) und zweite Hohlwelle (40) einen vorgebbaren minimalen lichten Durchmesser (58) aufweisen.

14. Stellantrieb (10) nach einem der Ansprüche 7 bis 13, **dadurch gekennzeichnet, dass** das Stützrad (44) des Planetengetriebes (14) eine Außenverzahnung (46) aufweist, die mit einer Verzahnung einer Messwelle (48) in Eingriff steht.

15. Stellantrieb (10) nach Anspruch 14, **dadurch gekennzeichnet, dass** die durch das Stützrad (44) auf die Messwelle (48) übertragenen Kräfte oder Momente durch eine mit der Messwelle (48) verbundene Federanordnung aufgenommen werden und dass die Auslenkung der Federanordnung ein Maß für die Größe der übertragenen Kraft oder des übertragenen Drehmomentes ist.

16. Stellantrieb (10) nach einem der Ansprüche 14 oder 15, **dadurch gekennzeichnet, dass** die Messwelle (48) die Welle eines Handrades oder eines Handradgetriebes ist.

17. Stellantrieb (10) nach einem der vorgenannten Ansprüche, **dadurch gekennzeichnet, dass** die zweite Hohlwelle (40) ein Innengewinde aufweist.

## Claims

1. An actuator (10) for valves and fittings, comprising a planetary gear (14), more particularly a planetary differential gear, the radially inward region of which is formed as a hollow shaft and which has an output shaft (40) cooperating with the valve or fitting to be operated, and comprising a drive (12), wherein a drive shaft (16) of the planetary gear (14) is connected to and drivable by said drive, wherein the drive shaft is configured as first hollow shaft (16), wherein the drive, the first hollow shaft (16) and the output shaft (40) have a common rotational axis and a planet carrier (28) is connected to the first hollow shaft (16) such or, with its radially inward region, is formed as first hollow shaft (16) such that, while the first hollow shaft (16) makes a rotation, the rotary movement is also made by the planet carrier (28),
**characterized in that** the output shaft is configured as second hollow shaft (40) and that at least the smaller one of the two inside diameters of the hollow shafts is adapted to the transverse dimensions of a drive rod of a valve or fitting that can be connected to the output shaft, said drive rod essentially extending in longitudinal direction.

2. The actuator (10) according to Claim 1, **characterized in that** the drive rod can be moved through the first (16) and the second hollow shafts (40) in its longitudinal direction.

3. The actuator (10) according to anyone of Claims 1 or 2,
**characterized in that** the drive is an electric motor, more particularly a servomotor (12), or a pneumatic motor or a hydraulic motor.

4. The actuator (10) according to anyone of Claims 1 to 3,
**characterized in that** the drive comprises a further hollow shaft which is connected to the first hollow shaft (16) or is configured as first hollow shaft (16).

5. The actuator (10) according to Claim 4, **characterized in that** an inside diameter of the further hollow shaft is adapted to the diameters of the first (16) and the second hollow shafts (40).

6. The actuator (10) according to Claim 4 to 5,
**characterized in that** the drive rod can be moved through the further hollow shaft in its longitudinal direction.

7. The actuator (10) according to anyone of Claims 4 to 6,
**characterized in that** the planet carrier (28) has at least one planet gear (30) and the output shaft configured as second hollow shaft (40) has a first internal toothing which is in engagement with a toothing of the at least one planet gear (30), and a support wheel (44) is provided which has a second internal toothing, said second internal toothing also being in engagement with the toothing of the at least one planet gear (30) and by means of which support wheel (44) the forces or torques occurring can be transmitted to a housing operatively connected thereto, wherein the driving forces can be transmitted to the at least one planet gear (30) or to the planet carrier (28) by means of the first hollow shaft (16) and wherein an imaginary rotational axis of the at least one planet gear (30) is always positioned outside of the inside diameter of the first hollow shaft (16).

8. The actuator (10) according to anyone of the preceding claims, **characterized in that** the first hollow shaft (16), more particularly a free end of the first hollow shaft (16), is formed as a part of the drive.

9. The actuator (10) according to anyone of the preceding claims, **characterized in that** the first hollow shaft (16), more particularly a free end of the hollow shaft (16), is formed as an armature or special armature or rotor of an electric motor.

10. The actuator (10) according to anyone of Claims 1 to 8,
**characterized in that** the first hollow shaft (16), more particularly a free end of the hollow shaft (16), is formed as a rotor, impeller or turbine of a pneumatic or hydraulic motor.

11. The actuator (10) according to anyone of Claims 9 or 10,
**characterized in that** the first hollow shaft (16) is formed integrally with the armature or special armature or the rotor of the electric motor or the rotor, the impeller or the turbine of the pneumatic or hydraulic motor.

12. The actuator (10) according to anyone of the preceding claims, **characterized in that** the second hollow shaft (40) is configured as coupling, more particularly as form-locking coupling, on its front side facing away from the first hollow shaft (16).

13. The actuator (10) according to anyone of the preceding claims, **characterized in that** the first (16) and the second hollow shafts (40) have a predefinable minimum inside diameter (58).

14. The actuator (10) according to anyone of Claims 7 to 13,
**characterized in that** the support wheel (44) of the planetary gear (14) has an external toothing (46) which is in engagement with a toothing of a sensing shaft (48).

15. The actuator (10) according to Claim 14, **characterized in that** the forces or torques transmitted to the sensing shaft (48) via the support wheel (44) are absorbed by a spring arrangement connected to the sensing shaft (48) and that the deflection of the spring arrangement is a measure for the size of the force transmitted or the torque transmitted.

16. The actuator (10) according to anyone of Claims 14 or 15,
**characterized in that** the sensing shaft (48) is the shaft of a handwheel or a handwheel gear.

17. The actuator (10) according to anyone of the preceding claims, **characterized in that** the second hollow shaft (40) has an internal thread.

## Revendications

1. Mécanisme d'actionnement (10) pour des appareils de robinetterie, avec un engrenage planétaire (14), et plus particulièrement un engrenage différentiel planétaire, dont la zone radialement intérieure se présente sous la forme d'un arbre creux et qui comporte un arbre de sortie (40) qui coopère avec l'appareil de robinetterie à actionner, et avec un entraînement (12), un arbre d'entraînement (16) de l'engrenage planétaire (14) étant relié à l'entraînement et pouvant être entraîné par celui-ci, l'arbre d'entraînement étant réalisé comme premier arbre creux (16), l'entraînement, le premier arbre creux (16) et l'arbre de sortie (40) ayant un axe de rotation commun et un porte-satellites (28) étant relié au premier arbre creux (16) ou étant réalisé, avec sa zone radialement intérieure réalisée comme premier arbre creux (16), de manière telle que, lors d'une rotation du premier arbre creux (16), le mouvement de rotation est également exécuté par le porte-satellites (28), **caractérisé en ce que** l'arbre de sortie est réalisé comme deuxième arbre creux (40) et **en ce qu'**au moins le plus petit des deux diamètres intérieurs des arbres creux est adapté aux dimensions transversales d'une tige d'entraînement, sensiblement allongée, d'un appareil de robinetterie pouvant être relié à l'arbre de sortie.

2. Mécanisme d'actionnement (10) selon la revendication 1, **caractérisé en ce que** la tige d'entraînement peut être déplacée dans son sens longitudinal à travers le premier arbre creux (16) et le deuxième arbre creux (40).

3. Mécanisme d'actionnement (10) selon l'une des revendications 1 ou 2, **caractérisé en ce que** l'entraînement est un moteur électrique, et plus particulièrement un servomoteur (12), ou un moteur pneumatique ou un moteur hydraulique.

4. Mécanisme d'actionnement (10) selon l'une quelconque des revendications 1 à 3, **caractérisé en ce que** l'entraînement comporte un autre arbre creux qui est relié au premier arbre creux (16) ou est réalisé comme premier arbre creux (16).

5. Mécanisme d'actionnement (10) selon la revendication 4, **caractérisé en ce qu'**un diamètre intérieur de l'autre arbre creux est adapté aux diamètres du premier arbre creux (16) et du deuxième arbre creux (40).

6. Mécanisme d'actionnement (10) selon la revendication 4 ou 5, **caractérisé en ce que** la tige d'entraînement peut être déplacée dans son sens longitudinal à travers l'autre arbre creux.

7. Mécanisme d'actionnement (10) selon l'une quelconque des revendications 4 à 6, **caractérisé en ce que** le porte-satellites (28) comporte au moins un satellite (30) et l'arbre de sortie réalisé comme deuxième arbre creux (40) comporte une première denture intérieure qui est en prise avec une denture de l'au moins un satellite (30), et une roue de support (44) est prévue, laquelle comporte une deuxième denture intérieure qui est également en prise avec la denture de l'au moins un satellite (30), et laquelle roue de support (44) permet de transmettre les forces ou couples sur un boîtier qui est en liaison active avec elle-même, le premier arbre creux (16) permettant de transmettre les forces d'entraînement sur l'au moins un satellite (30) ou au porte-satellites (28) et un axe de rotation imaginaire de l'au moins un satellite (30) se trouvant toujours en dehors du diamètre intérieur du premier arbre creux (16).

8. Mécanisme d'actionnement (10) selon l'une quelconque des revendications précédentes, **caractérisé en ce que** le premier arbre creux (16), et plus particulièrement une extrémité libre du premier arbre creux (16), est réalisé comme pièce de l'entraînement.

9. Mécanisme d'actionnement (10) selon l'une quelconque des revendications précédentes, **caractérisé en ce que** le premier arbre creux (16), et plus particulièrement une extrémité libre du premier arbre creux (16), est réalisé comme induit ou roue motrice ou rotor d'un moteur électrique.

10. Mécanisme d'actionnement (10) selon l'une quelconque des revendications 1 à 8, **caractérisé en ce que** le premier arbre creux (16), et plus particulièrement une extrémité libre du premier arbre creux (16), est réalisé comme rotor, roue à pales ou turbine d'un moteur pneumatique ou hydraulique.

11. Mécanisme d'actionnement (10) selon l'une des revendications 9 ou 10, **caractérisé en ce que** le premier arbre creux (16) et l'induit ou la roue motrice ou le rotor du moteur électrique, ou le rotor, la roue à pales ou la turbine du moteur pneumatique ou hydraulique, sont réalisés d'une seule pièce.

12. Mécanisme d'actionnement (10) selon l'une quelconque des revendications précédentes, **caractérisé en ce que** le deuxième arbre creux (40) est réalisé, en sa face frontale opposée au premier arbre creux (16), comme accouplement, et plus particulièrement comme accouplement avec engagement par conjugaison de forme.

13. Mécanisme d'actionnement (10) selon l'une quelconque des revendications précédentes, **caractérisé en ce que** le premier arbre creux (16) et le deuxième arbre creux (40) présentent un diamètre intérieur (58) minimal prédéterminable.

14. Mécanisme d'actionnement (10) selon l'une quelconque des revendications 7 à 13, **caractérisé en ce que** la roue de support (44) de l'engrenage planétaire (14) comporte une denture extérieure (46) qui est en prise avec une denture d'un arbre de mesure (48).

15. Mécanisme d'actionnement (10) selon la revendication 14, **caractérisé en ce que** les forces ou couples transmis par la roue de support (44) sur l'arbre de mesure (48) sont absorbés par un ensemble élastique relié à l'arbre de mesure (48) et **en ce que** l'excursion de l'ensemble élastique est une mesure de la grandeur de la force transmise ou du couple transmis.

16. Mécanisme d'actionnement (10) selon l'une des revendications 14 ou 15, **caractérisé en ce que** l'arbre de mesure (48) est l'arbre d'un volant ou d'un engrenage de volant.

17. Mécanisme d'actionnement (10) selon l'une quelconque des revendications précédentes, **caractérisé en ce que** le deuxième arbre creux (40) présente un filetage intérieur.
